Europäisches Patentamt

European Patent Office

Office européen des brevets

(11) Numéro de publication : **0 527 087 A1**

(12)
# DEMANDE DE BREVET EUROPEEN

(21) Numéro de dépôt : **92402231.2**

(22) Date de dépôt : **05.08.92**

(51) Int. Cl.⁵ : **H01S 3/09**

(30) Priorité : **07.08.91 FR 9110042**

(43) Date de publication de la demande : **10.02.93 Bulletin 93/06**

(84) Etats contractants désignés : **DE GB IT NL**

(71) Demandeur : **COMMISSARIAT A L'ENERGIE ATOMIQUE**
**31-33, rue de la Fédération**
**F-75015 Paris (FR)**

(72) Inventeur : **Iracane, Daniel**
**129 rue Marceau**
**F-91120 Palaiseau (FR)**

(74) Mandataire : **Mongrédien, André et al**
**c/o BREVATOME 25, rue de Ponthieu**
**F-75008 Paris (FR)**

(54) **Laser à électrons libres à onduleur perfectionné.**

㊗     L'onduleur est apte à créer un champ magnétique transverse avec deux périodicités (P1, P2).
     Le spectre d'émission s'en trouve sensible-
ment réduit.

FIG. 2

EP 0 527 087 A1

## Domaine technique

La présente invention a pour objet un laser à électrons libres à onduleur perfectionné. Elle trouve une application dans la production de rayonnements cohérents dans une plage allant du domaine submillimétrique au proche infrarouge.

## Etat de la technique antérieure

Un laser à électrons libres comprend schématiquement une source d'électrons, une structure accélératrice pour donner à ces électrons des vitesses relativistes et divers déviateurs permettant d'introduire le faisceau accéléré dans une structure magnétique dite onduleur (ou "wiggler" en terminologie anglo-saxonne). Cet onduleur est formé d'aimants alternés créant un champ magnétique transverse, alterné et périodique. A l'intérieur de cet onduleur, le faisceau d'électrons subit des déflexions dans le plan perpendiculaire au champ magnétique. A la sortie, le faisceau d'électrons est à nouveau défléchi par un déviateur et finalement absorbé par un atténuateur. Deux miroirs peuvent encadrer l'onduleur.

L'onduleur est le siège d'une interaction entre le faisceau d'électrons et une onde électromagnétique créée lors des déflexions du faisceau. Si certaines conditions sont respectées, l'onde électromagnétique est amplifiée aux dépends de l'énergie du faisceau d'électrons. Un faisceau électromagnétique intense et cohérent est alors émis par la structure.

On peut trouver une description de ce dispositif dans le brevet des Etats-Unis d'Amérique n° 3,822,410 délivré à John M.J. MADEY.

Les lasers à électrons libres sont des sources de rayonnement remarquables, essentiellement pour deux raisons : d'abord parce qu'ils permettent un accord en longueur d'onde ; ensuite parce que le milieu amplificateur étant constitué par un faisceau d'électrons dans le vide, ils peuvent fonctionner à de très fortes puissances, sans être le siège de phénomènes de claquage comme on en rencontre dans d'autres types de laser (à solide, à gaz ou à liquide).

Cependant, ces dispositifs présentent dans certaines applications un inconvénient. Le spectre du rayonnement qu'ils émettent est très large et évolue généralement de manière cahotique d'un passage à l'autre dans l'onduleur. De toute manière, la largeur du spectre est fixée par construction et, dans certains cas, on souhaiterait pouvoir régler cette largeur pour l'optimiser en fonction de l'application.

Pour obtenir ce résultat, on pourrait introduire dans la zone d'interaction divers moyens de sélection en longueur d'onde, fonctionnellement équivalents à un monochromateur. Mais, ce faisant, l'un des avantages soulignés plus haut disparaîtrait à savoir l'absence de tout milieu matériel susceptible de gêner l'obtention de très fortes puissances.

L'invention a pour but de remédier à cet inconvénient. Elle permet d'obtenir un spectre beaucoup plus étroit que dans l'art antérieur, sans qu'il soit besoin d'adjoindre des éléments physiques sur le trajet du faisceau ; par ailleurs, elle permet un réglage de la largeur du spectre, très simple à mettre en oeuvre.

## Exposé de l'invention

A cette fin, l'invention préconise d'agir uniquement sur le champ magnétique produit dans l'onduleur. Selon l'invention, la réduction de la largeur du spectre est obtenue par l'utilisation d'un onduleur particulier apte à créer un champ magnétique présentant une double périodicité (ou un double "pas", ou, si l'on veut encore une double "longueur d'onde" si l'on assimile le champ magnétique périodique à une onde, ou encore une double "fréquence", à condition de donner à ce mot le sens de "fréquence spatiale").

L'existence de cette double périodicité modifie profondément les conditions d'interaction onde-électrons au sein de l'onduleur et provoque, de manière surprenante, une réduction sensible de la largeur spectrale du rayonnement émis.

De manière précise, la présente invention a donc pour objet un laser à électrons libres comprenant des moyens pour former un faisceau d'électrons, des moyens pour introduire ce faisceau suivant l'axe d'un onduleur, cet onduleur comprenant des moyens pour créer le long de son axe un champ magnétique transverse dont le sens alterne périodiquement le long de l'axe, ce laser étant caractérisé par le fait que l'onduleur comprend des moyens tels que ledit champ magnétique soit la superposition d'un premier champ dont le sens alterne avec une première périodicité le long de l'axe et d'un second champ dont le sens alterne avec une seconde périodicité le long de l'axe.

De préférence, les deux champs sont proches dans leur périodicité mais très différents dans leur amplitude. Le premier champ ayant une première périodicité P1 et une première amplitude B1 et le second une seconde périodicité P2 et une seconde amplitude B2, l'écart relatif (P2-P1)/P1 des périodicités est de l'ordre de quelques pourcents et la seconde amplitude B2 est de l'ordre du dizième de la première B1.

## Brève description des dessins

- la figure 1 représente schématiquement deux champs magnétiques transverses à périodicités différentes ;
- la figure 2 montre un relevé de champ magnétique dans un onduleur conforme à l'invention ;
- la figure 3 montre un premier exemple de réalisation d'un onduleur selon l'invention ;
- la figure 4 montre un second exemple de réalisation d'un onduleur selon l'invention ;
- la figure 5 montre le spectre spatial du champ magnétique dans l'onduleur ;

- les figures 6a, 6b, 6c montrent le spectre d'émission spontanée pour l'art antérieur (6a) et pour deux distributions particulières du champ magnétique selon l'invention (6b, 6c) ;

- les figures 7a, 7b, 7c montrent le gain d'amplification à faible champ électromagnétique pour l'art antérieur (7a) et pour deux distributions particulières du champ magnétique selon l'invention (7b, 7c) ;

- la figure 8 montre l'évolution du rendement du laser en fonction du nombre de passages de l'onde ;

- les figures 9a et 9b montrent la fréquence relative de l'onde laser au 500[ième] passage (9a) et au 1000[ième] passage (9b) pour l'art antérieur et pour l'invention.

## Exposé détaillé de modes de réalisation

Selon l'invention, le champ magnétique créé par l'onduleur, s'il est bien toujours transverse par rapport à l'axe général de l'onduleur, comme dans l'art antérieur, présente comme originalité d'être la superposition de deux champs transverses de périodicités différentes. Il est d'usage de décrire la variation du champ magnétique d'un onduleur le long de l'axe de celui-ci par une fonction sinusoïdale, même si cette fonction n'est pas rigoureusement suivie dans la pratique. On écrit donc, en général, le champ transverse sous la forme

$$B\cos(2\pi Z/P + \varphi)$$

où B est une amplitude, Z est la distance le long de l'axe et P le pas du champ (ou sa période, ou, si l'on veut encore sa "longeur d'onde" si l'on assimile le champ à une onde dans l'espace), et où $\varphi$ est une phase.

Selon l'invention, le champ est alors de la forme

$$B1\cos(2\pi Z/P1 + \varphi1) + B2\cos(2\pi Z/P2 + \varphi2)$$

Par analogie avec les phénomènes vibratoires ayant des fréquences différentes, on peut définir un "battement" entre ces deux champs dont la fréquence est la différence des fréquences spatiales. On peut ainsi définir une longueur d'onde de battement Pb, qui n'est autre que la période du champ global résultant de la superposition des deux champs :

$$Pb = P1 P2/P2 - P1.$$

On peut définir aussi l'écart relatif en fréquence Ef par :

$$P2 = P1/(1 - Ef)$$

ou

$$Ef = (P2 - P1)/P2$$

ainsi que l'écart relatif en amplitude Ea par :

$$Ea = B2/(B1 + B2),$$

ou

$$B2/B1 = Ea/(1 - Ea).$$

L'écart relatif en amplitude traduit l'amplitude relative du second champ par rapport au premier.

On peut définir encore des potentiels normalisés par les expressions :

$$a1 = B1P1\, e/mc2\pi$$
$$a2 = B2P2\, e/mc2\pi$$

et un taux de modulation m par :

$$m = - dPb/P1$$

avec

$$d = 2a1a2/(1 + a_1{}^2 + a_2{}^2).$$

Quant aux phases $\varphi1$ et $\varphi2$, on peut prendre, par exemple, mais sans que cela constitue une limitation de l'invention, $\varphi1 = 0$ et $\varphi2 = \pi/2$, ce qui revient à considérer que le champ est la superposition d'un champ en cosinus et d'un champ en sinus.

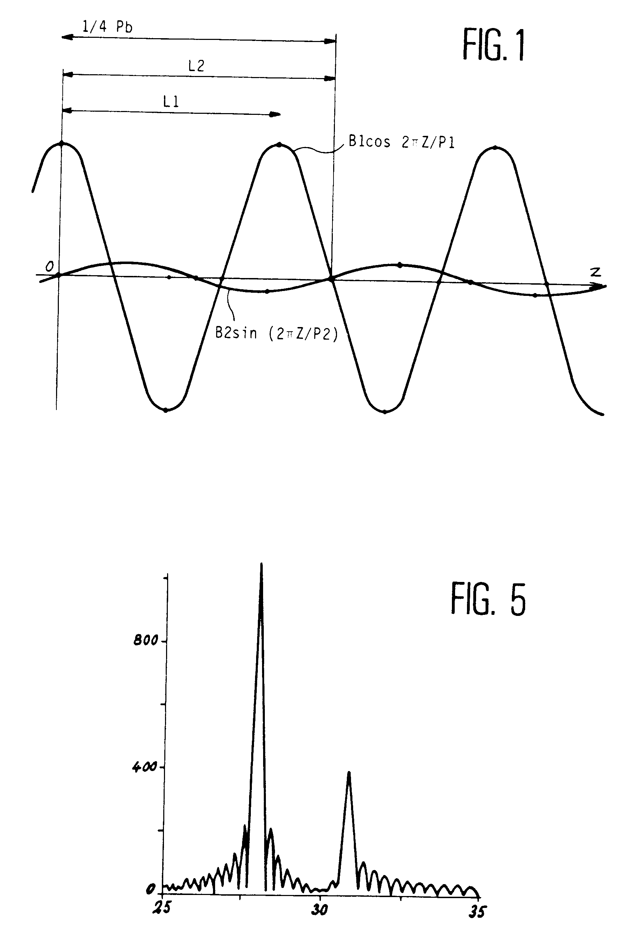

La figure 1 montre ainsi, de manière schématique, un premier champ en cosinus, d'amplitude B1 et de période P1 et un second champ en sinus, d'amplitude B2 et de période P2.

Dans la pratique, le champ en sinus et d'amplitude beaucoup plus faible que le champ en cosinus mais les périodes P1 et P2 sont proches. C'est ce qui est représenté approximativement sur la figure 1.

De façon plus précise, B2 est de l'ordre du dizième de B1 (en pratique B2 est compris entre 0,01 B1 et 0,3 B1).

De même, l'écart relatif des pas P2-P1/P1 est de l'ordre du dizième (en pratique compris entre 0,01 et 0,1).

On voit ainsi, sur la figure 1, un champ en cosinus de période 16 unités arbitraires et un champ en sinus de période 20 unités, ce qui correspond à un rapport Ef =(P2-P1)/P2 de 0,2 et à une longueur de battement Pb de 80 unités.

Pour employer une terminologie propre à la radioélectricité, on pourrait dire que le champ magnétique dans l'onduleur est la superposition d'une "onde porteuse" (en B1cos $2\pi Z/P1$) modulée par une onde plus faible et de fréquence proche B2sin $2\pi Z/P2$).

L'onduleur possède une longueur L. Dans l'art antérieur, cette longueur est égale à N fois le pas unique P du champ magnétique (L=NP). Dans le cas de l'invention, la longueur L de l'onduleur peut être égale à la longueur d'onde de battement Pb ou à un multiple de celle-ci.

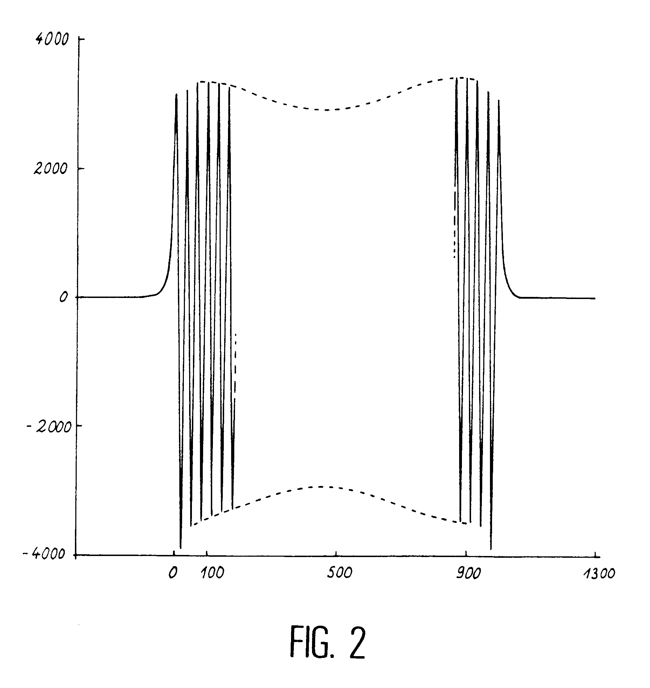

La figure 2 est un relevé du champ magnétique transverse dans un onduleur à double périodicité selon l'invention. L'axe des abscisses correspond à l'axe longitudinal de l'onduleur. Les unités sont en millimètres. Dans le cas illustré, l'onduleur présente une longueur d'un mètre. La figure 2 montre bien le "battement" des deux champs, la longueur d'onde du battement étant, dans le cas représenté, légèrement inférieure à la longueur totale de l'onduleur.

Pour réaliser l'onduleur de l'invention, on peut utiliser largement les techniques connues dans l'art antérieur. Sur la technologie générale des onduleurs, on peut citer, par exemple, l'article de G.A. DEIS et al. du Lawrence Livermore National Laboratory et de K. HALBACH du Lawrence Berkeley Laboratory, intitulé "Electromagnetic Wiggler Technology Development At The Lawrence Livermore National Laboratory" publié dans la revue IEEE Transactions on Magnetics, vol. 24, n° 2, Mars 1988, p. 986-989.

Pour réaliser un onduleur à double périodicité, on peut s'inspirer également des solutions connues pour modifier les paramètres d'un onduleur. On sait ainsi qu'il est possible de réaliser des onduleurs avec des aimants permanents alternés et des pièces polaires disposées entre aimants dans une configuration dite de HALBACH. Les aimants peuvent être déplacés transversalement pour régler le champ magnétique en regard des pièces polaires correspondantes.

On peut ainsi régler soit l'intervalle entre pièces polaires (le "gap" selon la terminologie anglosaxonne) soit l'amplitude du champ magnétique le long de l'axe de l'onduleur, par exemple pour diminuer progressivement ce champ ("tapering" en terminologie anglosaxonne). On pourra consulter à ce sujet l'article de Mark CURTIN et al. intitulé "Initial Results of Operating The Rocketdyne Undulator in a Tapered Configuration" publié dans la revue Nuclear Instruments and Methods in Physics Research A 296 (1990) 69-74, p. 69-74 ou l'article de N.M. KROLL et al. intitulé "Free-Electron Lasers with Variable Parameter Wigglers" publié dans la revue IEEE Journal of Quantum Electronics, vol. QE-17, n° 8, Août 1981. On notera attentivement toutefois qu'un onduleur à amincissement de champ ("taper") n'est pas un onduleur à double périodicité, comme celui de l'invention.

Les auteurs cités précédemment qualifient d'adiabatique le lent amincissement du champ. Par analogie et par opposition, le profil particulier avec battement de fréquence donné au champ dans le laser de l'invention (Fig. 2), peut être qualifié, lui, de "non adiabatique".

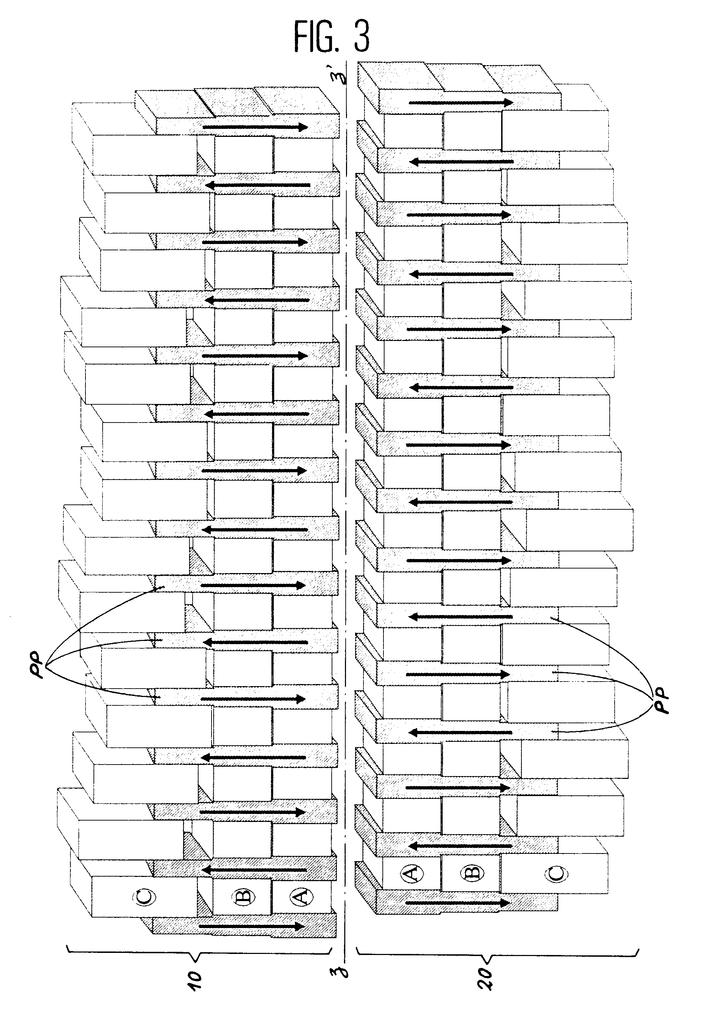

La figure 3 illustre un premier mode de réalisation possible d'un onduleur à double périodicité. L'onduleur représenté comprend deux sous-ensembles 10 et 20 disposés symétriquement de part et d'autre part de l'axe zz'. Chaque ensemble comprend des pièces polaires PP, par exemple en fer doux, entre lesquelles sont insérés des aimants permanents. Ces aimants comportent chacun, près de l'axe, une ou (plusieurs) partie(s) telle(s) que A (et B) à proximite de l'axe zz' et positionnée(s) avec précision par rapport aux pièces polaires et à l'axe, et, éloignée de l'axe, une partie C dont la distance à l'axe est réglable. Le flux magnétique dans les pièces polaires PP est symbolisé par des flèches verticales. Par ailleurs, les sous-ensembles 10 et 20 peuvent être déplacés, l'un par rapport à l'autre, dans le sens de l'axe zz' par des moyens non représentés qui sont essentiellement deux châssis horizontaux sur lesquels sont fixés les deux sous-ensembles.

Sur l'exemple de la figure 3, les sous-ensembles 10 et 20 sont décalés d'un quart de periode. Ce point est fondamental pour obtenir les composantes en cosinus et sinus nécessaires à l'invention ; faute de quoi une modulation d'amplitude simple créerait trois fréquences au lieu de deux. En réglant la position de la partie C des aimants, on peut ajuster le pas du battement et son amplitude.

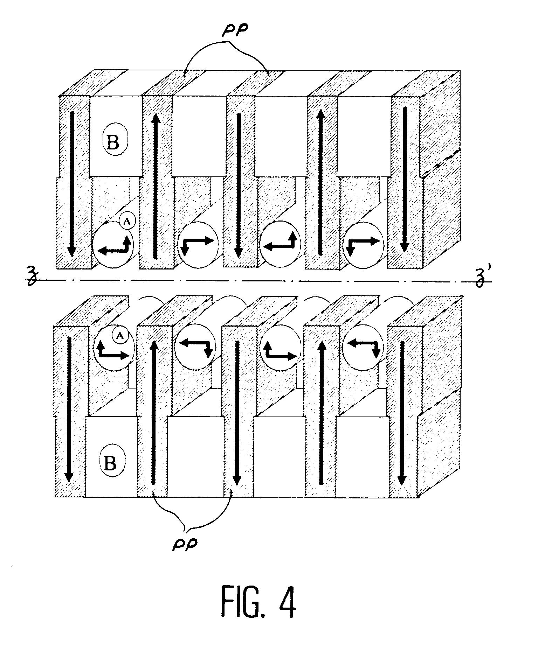

Sur la figure 4, est illustrée une variante dans laquelle une partie A des aimants, située à proximité de l'axe zz', est constituée par un cylindre, une autre partie B, éloignée de l'axe étant de forme parallélépipédique. Dans le cylindre A, le champ magnétique est orienté selon la somme vectorielle des deux champs représentés par des flèches. Ces aimants cylindriques, tous identiques, sont tournés d'un demi-tour l'un par rapport à l'autre.

On peut aussi remplacer en partie ou en totalité les aimants permanents par de petites bobines conductrices équipées d'un noyau magnétique.

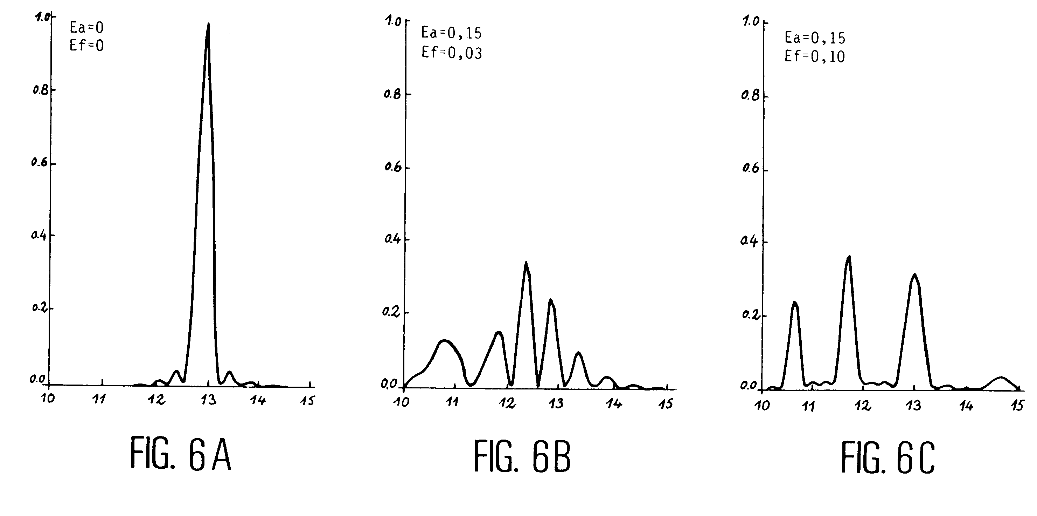

On voit, sur la figure 5, une courbe qui représente la répartition spatiale des divers composants du champ magnétique obtenu avec l'onduleur de l'invention, autrement dit le spectre (spatial) du champ.

Cette courbe n'est autre que la transformée de FOURIER spatiale du champ. On voit que ce spectre comprend un premier pic à 28,4 mm, (qui correspond à la première périodicité P1 du premier champ en cosinus) et un second pic, moins intense, à environ 31 mm, (qui correspond à la seconde périodicité P2 du second champ en sinus).

La largeur des pics est liée à la longueur finie de l'onduleur. Plus l'onduleur est long plus ces pics sont étroits.

Ce spectre a été obtenu sur un onduleur dit de HALBACH, constitué d'aimants permanents alternés et dont l'amplitude a été modulée.

Les figures 6a, 6b et 6c représentent la variation de l'intensité lumineuse spontanée en fonction de la longueur d'onde (exprimée en microns). La figure 6a correspond à l'art antérieur, c'est-à-dire à un écart relatif en fréquence Ef nul, (P2=P1) et à un écart relatif en amplitude Ea également nul (B2=B1). Ce spectre correspond à la fonction usuelle en sin x/x.

Lorsque, selon l'invention, les pas et les amplitudes des deux composants diffèrent, il apparaît de nouveaux pics dans le spectre. La figure 6b correspond au cas où Ea = 0,15 et Ef = 0,03. En première approximation, ces pics sont séparés par un intervalle égal à l'inverse de la longueur d'onde de battement. Lorsque l'écart relatif en fréquence Ef augmente et passe à 0,10 (pour un même écart relatif en amplitude de 0,15) le spectre présente plusieurs pics mieux séparés (Fig. 6c).

Par des considérations qui sortiraient du cadre de cette description, on peut montrer que, de façon générale, le spectre obtenu est une somme de pics décalés par rapport à un pic central, le poids du pic de rang n étant lié à la fonction de BESSEL de rang n, Jn(m), la variable étant le taux de modulation m. Lorsque ce taux de modulation est nul, seul un pic est présent (n=0). Dès que le taux augmente d'autres pics apparaissent de rang ± n et le pic correspodant à n=0 peut être rapidement dominé par les pics latéraux correspondant à n=1, n=2, etc...

L'écart relatif entre les différents pics est proportionnel à l'écart relatif en fréquence Ef et dépend donc de la période de battement Pb, alors que la largeur des pics est liée à la longueur de l'onduleur. Dans le cas où Ef est suffisamment grand (ce qui correspond à un pas de battement très inférieur à la longueur de l'onduleur), les pics n'interfèrent pas les uns avec les autres. C'est le cas sur la figure 6c où l'on reconnaît bien la présence de trois pics. En revanche, si le pas de battement est de l'ordre de la longueur de l'onduleur, il y a interférence entre les pics et le spectre est plus complexe (fig. 6b).

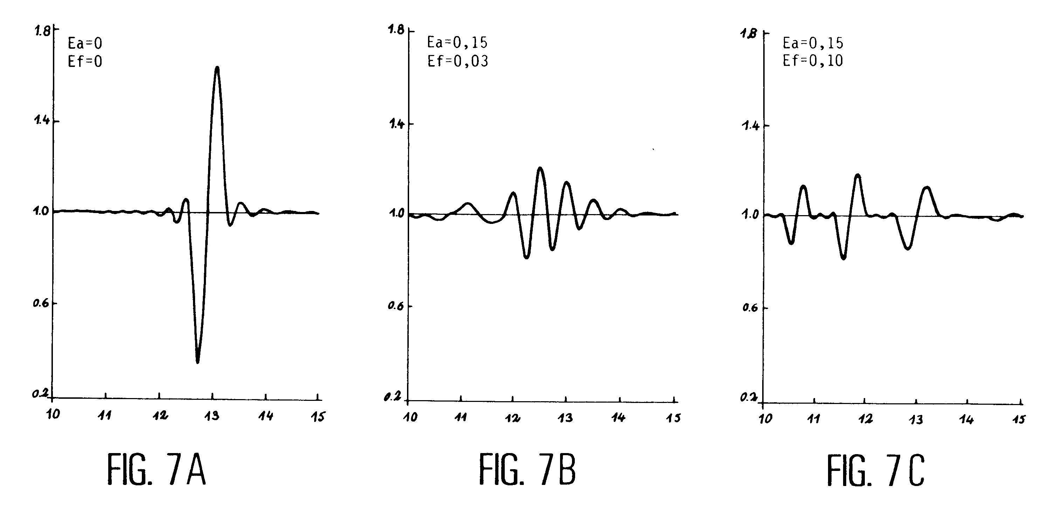

Les figures 7a, 7b et 7c montrent le gain d'amplification en fonction de la longueur d'onde (exprimée en microns) dans le cas d'un signal supposé faible, le régime étant supposé linéaire. Ce régime permet de caractériser le fonctionnement du laser à faible signal. On peut alors relier le gain d'amplification linéaire à faible signal au rayonnement spontané dans l'onduleur, comme pour les lasers à électrons libres de l'art antérieur, où ce lien entre gain d'amplification et rayonnement spontané est désigné parfois par "théorème de MADEY".

La figure 7a correspond encore au cas de l'art antérieur (Ea=0, Ef=0). la courbe de gain est la courbe classique telle qu'on la trouve, par exemple, dans le brevet américain cité plus haut délivré à J. MADEY.

La courbe de la figure 7b correspond à Ea=0,15 et Ef=0,03. Ce cas, comme déjà souligné à propos de la figure 6b, correspond à une longueur de battement comparable à la longueur de l'onduleur.

Pour la courbe de la figure 7c, Ea=0,15 et Ef=0,10 et la longueur de battement est beaucoup plus petite que la longueur de l'onduleur. Le gain se décompose alors en trois zones bien distinctes. Chacune correspond sensiblement au cas classique mais à trois longueurs d'onde différentes (respectivement vers 10,6μm, 11,6μm et 13μm).

Entre la situation de l'art antérieur (Fig. 7a) et celle de la figure 7c, la situation de la figure 7b est moins claire, car les diverses zones interfèrent. Le cas de la figure 7b est donc potentiellement riche de conséquences et constitue la zone de fonctionnement privilégiée de l'invention.

En régime de saturation du laser, la situation devient un peu plus complexe, car la présence du battement de champ magnétique modifie profondément l'interaction électrons-photons. On sait que, dans un laser à électrons libres classique, les trajectoires stables liées induisent des raies satellites (appelées "sideband") dans le rayonnement, lesquelles raies sont à l'origine d'un élargissement spectral observé après quelques centaines de passages (comme expliqué dans l'article de D. IRACANE et J.L. FERRER, publié dans "Physical Review letters, vol. 66 (1991), 33). Une déstabilisation des trajectoires semble créée par la deuxième périodicité du champ dans l'onduleur de l'invention, ce qui perturbe et donc limite l'amplification sur ces raies satellites et conduit, par conséquent, à une limitation de l'élargissement spectral.

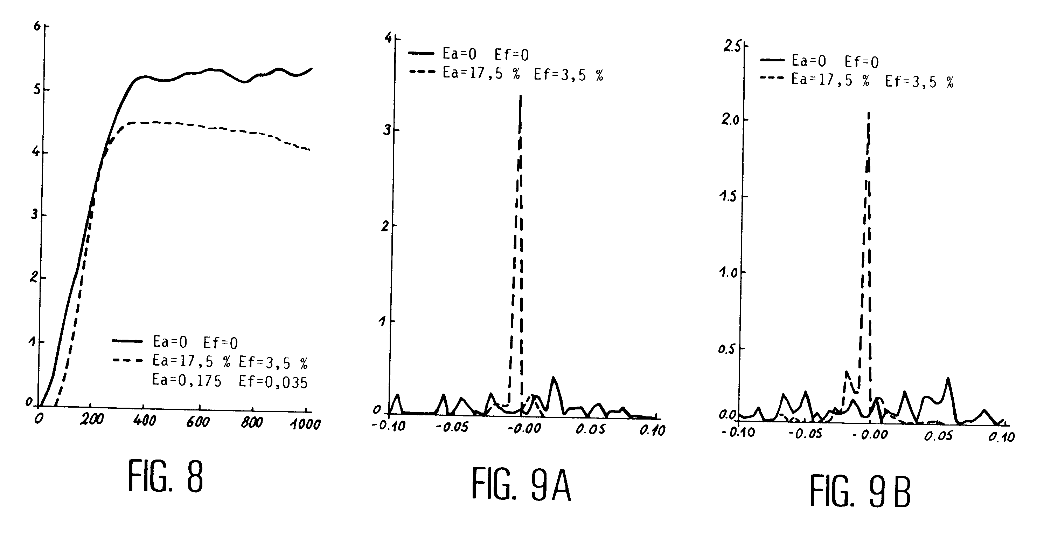

Les figures 8 et 9a et 9b permettent d'illustrer les résultats obtenus.

La figure 8, tout d'abord, montre le rendement d'extraction R, c'est-à-dire l'énergie laser extraite de la cavité optique par rapport à l'énergie électronique. Ce rendement est exprimé en pourcents. La figure 8 montre à la fois le rendement pour un laser de l'art antérieur (courbe en trait plein) et ce rendement pour un laser selon l'invention dans le cas où Ea=0,175 et Ef=0,035. En abscisses, figure le nombre de passages de l'onde laser dans l'onduleur.

On voit que le rendement à saturation reste voisin de 4%, ce qui est légèrement inférieur au rendement des lasers classiques, qui est de l'ordre de 5%. L'invention n'apporte donc rien de bénéfique à cet égard. Mais, pour le rendement exprimé en fonction de la fréquence, les résultats tournent très nettement à l'avantage de l'invention comme le montrent les figures 9a et 9b. Sur ces figures, le rendement est porté en ordonnées avec, en abscisses, la fréquence relative de l'onde par rapport à la fréquence principale. Ces courbes sont donc des courbes de finesse. La figure 9a correspond au 500$^{ieme}$ passage de l'onde et la figure 9b au 1000$^{ième}$ passage. La courbe en trait plein correspond, dans les deux cas, à l'art antérieur et la courbe en tirets à un laser selon l'invention avec Ea=0,175 et Ef=0,035.

On voit la modification spectaculaire obtenue grâce à l'invention : le spectre d'émission est beaucoup plus étroit. L'introduction d'une double périodicité dans l'onduleur (ou, si l'on veut, d'un battement ou d'une modulation du champ magnétique) induit des effets marqués sur le spectre d'émission du laser en réduisant sensiblement la largeur de ce spectre.

La modification très simple à effectuer de la place des aimants dans des structures du type de celles des figures 3 et 4 permet de régler la largeur du spectre.

## Revendications

1. Laser à électrons libres comprenant des moyens pour former un faisceau d'électrons et pour introduire ce faisceau suivant l'axe d'un onduleur, cet onduleur comprenant des moyens pour créer le long de son axe un champ magnétique transverse dont le sens alterne périodiquement le long de l'axe, ce laser étant caractérisé par le fait que l'onduleur comprend des moyens tels que ledit champ magnétique soit la superposition d'un premier champ dont le sens alterne avec une première périodicité le long de l'axe et d'un second champ dont le sens alterne avec une seconde périodicité le long de l'axe.

2. Laser à électrons libres selon la revendication 2, caractérisé par le fait que le premier champ ayant une première périodicité P1 et une première amplitude B1 et le second champ une seconde périodicité P2 et une seconde amplitude B2, l'écart relatif (P2-P1)/P1 des périodicités est de l'ordre de quelques pourcents et la seconde amplitude B2 est de l'ordre du dizième de la première B1.

3. Laser à électrons libres selon la revendication 1, caractérisé en ce que l'onduleur comprend un premier et un second sous-ensembles (10, 20) placés symétriquement par rapport à l'axe (zz') de l'onduleur, chaque sous-ensemble étant formé d'une alternance périodique de pièces polaires (PP) et de moyens de création d'un champ magnétique, ces deux sous-ensembles étant décalés l'un par rapport l'autre dans le sens de l'axe (zz').

4. Laser à électrons libres selon la revendication 3, caractérisé par le fait que les moyens pour créer un champ magnétique sont des aimants permanents.

5. Laser à électrons libres selon la revendication 4, caractérisé par le fait que chaque aimant permanent comprend une partie (A ou AB) située à proximité de l'axe (zz') de l'onduleur et une partie (C) éloignée de l'axe (zz'), la distance à l'axe de cette partie (C) étant réglable.

6. Laser à électrons libres selon la revendication 4, caractérisé par le fait que chaque aimant comprend une partie cylindrique (A) disposées à proximité de l'axe et une partie parallèlépipédique éloignée de l'axe, la distance à l'axe de cette partie parallélépipédique étant réglable.

FIG. 1

FIG. 5

FIG. 2

# FIG. 3

FIG. 4

FIG. 6A

FIG. 6B

FIG. 6C

EP 0 527 087 A1

FIG. 7A

FIG. 7B

FIG. 7C

EP 0 527 087 A1

Ea=0   Ef=0
Ea=17,5 % Ef=3,5 %
Ea=0,175  Ef=0,035

**FIG. 8**

Ea=0   Ef=0
Ea=17,5 %  Ef=3,5 %

**FIG. 9A**

Ea=0   Ef=0
Ea=17,5 %  Ef=3,5 %

**FIG. 9 B**

**Office européen des brevets**

## RAPPORT DE RECHERCHE EUROPEENNE

Numero de la demande

EP    92 40 2231

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| P,X | PHYSICAL REVIEW LETTERS<br>vol. 67, no. 22, 25 Novembre 1991, NEW YORK US<br>pages 3086 - 3089<br>D.IRACANE 'Two-frequency Wiggler for better control of Free-Electron-Laser dynamics'<br>* le document en entier * | 1 | H01S3/09 |
| D,A | US-A-3 822 410 (J.M.J.MADEY)<br>* abrégé * | 1 | |
| A | US-A-4 461 004 (J.M.J.MADEY)<br>* figures 2,4 * | 1 | |
| D,A | NUCLEAR INSTRUMENTS & METHODS IN PHYSICS RESEARCH, SECTION -A<br>vol. A296, 1990, AMSTERDAM<br>pages 69 - 74<br>M.CURTIN ET AL 'Initial results of operating the Rocketdyne undulator in a tapered configuration' | | |
| D,A | IEEE TRANSACTIONS ON MAGNETICS.<br>vol. 24, no. 2, Mars 1988, NEW YORK US<br>pages 986 - 989<br>G.A.DEIS ET AL 'Electromagnetic wiggler technology development at the Lawrence Livermore National Laboratory' | | **DOMAINES TECHNIQUES RECHERCHES (Int. Cl.5)**<br><br>H01S |
| A | NUCLEAR INSTRUMENTS & METHODS IN PHYSICS RESEARCH, SECTION -A<br>vol. A285, 1989, AMSTERDAM<br>pages 1 - 10<br>R.W.WARREN ET AL 'Near-ideal lasing with a uniform wiggler' | | |

Le présent rapport a été établi pour toutes les revendications

| Lieu de la recherche | Date d'achèvement de la recherche | Examinateur |
|---|---|---|
| LA HAYE | 11 NOVEMBRE 1992 | GALANTI M. |